# NEUE EUROPÄISCHE PATENTSCHRIFT

(11) **EP 0 490 375 B2**
(45) Veröffentlichungstag und Bekanntmachung des Hinweises auf die Entscheidung über den Einspruch: **01.08.2001**
(45) Hinweis auf die Patenterteilung: 12.06.1996
(21) Anmeldenummer: 91121307.2
(22) Anmeldetag: 12.12.1991
(51) Int. Cl.: G05B 19/18, B23Q 15/06

(54) **Multiachsen-multi-uP-NC-Regelung für Werkzeugmaschinen**
Multi-axis-multi-uP-NC-control for machine tools
Réglage par multiple uP-NC pour multiple axes de machines-outils

(30) Priorität: 13.12.1990 DE 4039771
(43) Veröffentlichungstag der Anmeldung: 17.06.1992
(73) Patentinhaber: Heesemann, Jürgen, Dipl.-Ing., D-32547 Bad Oeynhausen (DE)
(72) Erfinder: Heesemann, Jürgen, Dipl.-Ing., D-32547 Bad Oeynhausen (DE)
(74) Vertreter: Lins, Edgar, Dipl.-Phys. Dr.jur.

(56) Entgegenhaltungen:
- WO-A-89/05484
- WO-A-91/06901
- FR-B- 2 467 659

## Beschreibung

Die Erfindung betrifft eine Maschinensteuerung für durch mehrere bürstenlose Gleichstrommotore (1) genau zu positionierende Maschinenelemente mit einer zentralen Steuerung und mit Positionssensoren (6), deren Ausgangssignale mit Sollwerten verglichen werden und zur Erzeugung von Steuersignalen für ein dem jeweiligen Motor (1) zugeordnetes Leistungs teil (13) dienen, wobei dem jeweiligen Motor (1) ein mit der zentralen Steuerung verbundener Prozessor (8) zugeordnet ist, der selbsttätig die Ausgangssignale der Positionssensoren (6) für den zugehörigen Motor (1) auswertet und die Steuersignale für den Leistungsteil (13) des Motors (1) generiert.

Es ist bekannt, für Positionieraufgaben Antriebe einzusetzen, die lange Verfahrwege im Eilgang zurücklegen und im Schleichgang dann in die gewünschte Position verbracht werden. Die erforderlichen Schaltimpulse werden dadurch erzeugt, daß die Position des betreffenden Maschinenelementes durch Positionssensoren festgestellt und mit einer Sollposition verglichen wird. Hierzu werden die Meßsignale der Positionssensoren zur zentralen Steuerung geleitet und mit den dort eingegebenen Sollwerten verglichen Für die Übertragung der Meßsignale, die unter Umständen über große Kabellängen erfolgen muß, müssen umfangreiche Abschirmmaßnahmen vorgenommen werden, insbesondere wenn die Meßsignale in der Nähe von leistungsführenden Kabeln übertragen werden, so daß Storimpulse das Meßergebnis verfälschen können. Üblicherweise werden die Endanschläge für jede Positionierachse durch Endschalter überwacht. Auch diese Meßsignale werden zur zentralen Steuerung übertragen

Für nur etwas größere Maschinenanlagen wie beispielsweise Holzbearbeitungsmaschinen wird der Verdrahtungsaufwand erheblich und der Verkabelungsaufwand in dem Schaltschrank der zentralen Steuerung groß und schnell unübersichtlich

Aus EP-A-0 312 635 ist eine Steuerung für NC-Werkzeugmaschinen bekannt, bei der eine zentrale Steuerung in Form eines Rechners Wegstücke ermittelt, auf denen das Werkzeug im Bereich des Werkstückes verfahren werden kann, ohne zeitaufwendig vollständig aus dem Bereich des Werkzeugs herausgehoben zu werden. Für die dort betrachteten Werkstücke ist das Verfahren auf einer Kreisbahn vorteilhaft. Hierzu müssen Servomotoren für die X- und Y-Koordinale des Werkstücktisches gleichzeitig in geeigneter Weise verfahren werden. Die in der zentralen Steuerung ermittelten Wegstücke werden über eine den drei Servomotoren für die drei Koordinatenachsen gemeinsame Servosteuerung übermittelt und von dort in Treibersignale für die Servomotoren umgesetzt. Rückkoppelsignale für den momentanen Zustand des Servomotors gelangen in die gemeinsame Regelsteuerung und werden in entsprechende Regelsignale für die einzelnen Servomotoren umgewandelt. Die Servosteuerung stellt somit eine den Servomotoren gemeinsame Steuerungseinheit dar.

Eine Maschinensteuerung der eingangs erwähnten Art ist durch den Beitrag von E. Hopper in MOTORCON September 1982 Proceedings, Seiten 375 bis 379 bekannt. Gemäß dem darin beschriebenen Konzept wird jedem Motor ein mit der zentralen Steuerung verbundener Prozessor zugeordnet, der selbsttätig die Ausgangssignale der Positionssensoren für den zugehörigen Motor auswertet und die Steuersignale für den Leistungsteil des Motors generiert. Dadurch wird die Aufgabe der zentralen Steuerung darauf reduziert, einen Fahrbefehl für das Maschinenelement bzw. in den damit verbundenen Motor zu generieren und zu übertragen, während die Ausführung dieses Fahrbefehls bis zur exakten Positionierung für normale Fälle von dem dem jeweiligen Motor zugeordneten Prozessor ausgeführt und überwacht wird. Für komplexe Funktionen kann allerdings auf die zentrale Steuerung zurückgegriffen werden, so daß in diesem Fall hohe Datenraten übertragen werden müssen.

Der Erfindung liegt die Aufgabe zugrunde, die Maschinensteuerung der eingangs erwähnten Art so auszubilden, daß das mit ihr verwirklichte Konzept in einfacher Weise und in einer zweckmäßigen mechanischen Anordnung umgesetzt werden kann.

Zur Lösung dieser Aufgabe ist erfindungsgemäß eine Maschinensteuerung der eingangs erwähnten Art dadurch gekennzeichnet, daß der im bürstenlosen Gleichstrommotor enthaltene Sensor für die Drehbewegung des Motors auch als Positionssensor für den Prozessor verwendet wird, daß der Positionssensor Inkremente der Drehbewegung des Motors detektiert und dem Prozessor übermittelt, daß der Prozessor aus den detektierten Drehbewegungen die absolute Position des jeweiligen Maschinenelements durch Summenbildung ermittelt und den ermittelten Wert in einem Speicher ablegt und daß der Prozessor und das Leistungsteil in einem gemeinsamen Gehäuse an das Motorengehäuse angesetzt ist.

Bei der erfindungsgemäßen Maschinensteuerung werden die in den bürstenlosen Gleichstrommotoren integrierten Positionsgeber, der die Aufgabe hat, den Erregerstrom für den bürstenlosen Gleichstrommotor zu kommutieren, als Positionssensor für den dem Motor zugeordneten Prozessor verwendet. Hierzu wird die Summe der detektierten Drehbewegungen in dem Prozessor gebildet und aus den detektierten Drehbewegungen vom Prozessor die absolute Position des jeweiligen Maschinenelements errechnet und in einem Speicher abgelegt. Hierdurch entfällt die Notwendigkeit, für die durch den Prozessor durchzuführende Positionsregelung separate Positionssensoren vorzusehen. Der Prozessor und die Leistungsstufen sind in einem gemeinsamen Gehäuse untergebracht, das an das Motorengehäuse angesetzt ist.

Durch die erfindungsgemäße Maschinensteuerung wird die Aufteilung der Steuerungsaufgaben umgesetzt, die teilweise in der zentralen Steuerung und teilweise dezentral für jeden Stellmotor erledigt werden. Die zentrale Steuerung hat dabei die Aufgabe, eingegebene Sollpositionen in die Sollsignale für jede Stellachse des Maschinenelements umzuwandeln und daraus die entsprechende Sollposition für die betreffende Achse des Maschinenelements zu ermitteln. Der sich hieraus ergebende Fahrauftrag für den Stellmotor des Maschinenelements wird durch das dezentrale, dem Stellmotor zugeordnete Steuerungsteil erledigt. Durch diese Aufteilung der Steuerungsaufgaben und durch die Anordnung des Leistungsteils und des Prozessors in einem gemeinsamen Gehäuse in unmittelbarer Nähe des Motors wird der Verkabelungsaufwand zwischen der zentralen Steuerung und dem Prozessor gering und kann neben der Stromversorgung auf eine Datenleitung reduziert werden. Die kurzen Verbindungen zwischen den Positionssensoren und dem Prozessor einerseits sowie zwischen den in dem gemeinsamen Gehäuse untergebrachten Prozessor und dem Leistungsteil andererseits erlaubt eine störungsunanfällige und wenig aufwendige Verkabelung.

Die Erfindung soll im folgenden anhand eines in der Zeichnung dargestellten Ausführungsbeispieles näher erläutert werden. Es zeigen:
- Figur 1: eine schematische Darstellung eines dezentralen Steuerungsteils mit externen Sensoren und einem gesteuerten Stellmotor mit einem Positionsgeber
- Figur 2: eine Seitenansicht auf das Gehäuse eines Stellmotors mit einem angeflanschten gemeinsamen Gehäuse für den Leistungsteil und den Prozessor

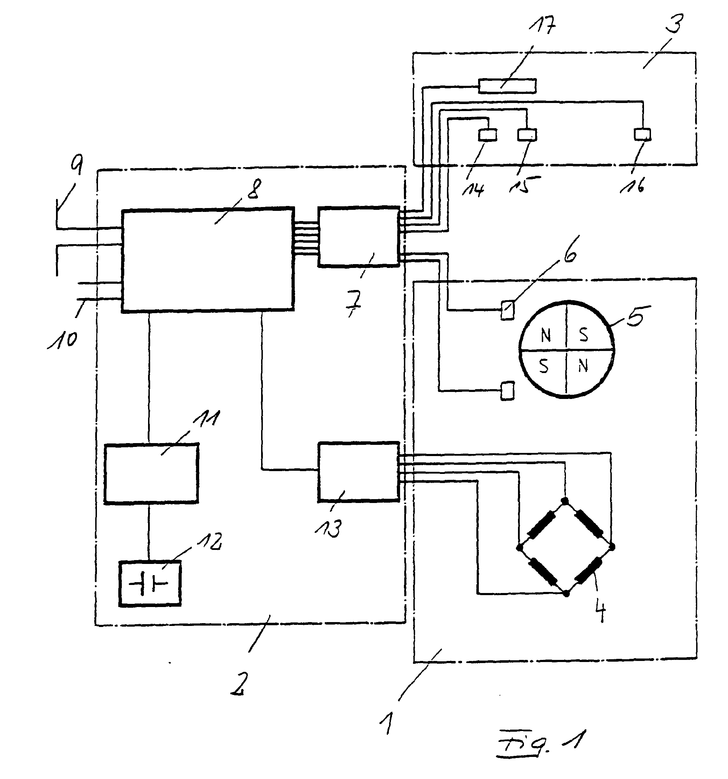

Das in **Figur 1** dargestellte elektrische Schema repräsentiert einen Stellmotor 1, ein Steuerungsteil 2 und ein Sensorteil 3.

Der Motor weist vier stromdurchflossene Wicklungen 4 auf, die einen Stator bilden, in dem ein im Querschnitt mit vier Quadranten magnetisch ausgebildeter Rotor 5 rotiert. Der Rotor 5 wird von zwei stationären Positionsgebern 6 überwacht, die beispielsweise als Hall-Elemente ausgebildet sind und das vom Rotor ausgehende Magnetfeld detektieren, um dessen momentane Stellung relativ zu den Spulen 4 zu delektieren. Die Positionssignale der Positionsgeber 6 gelangen über eine Anpassungsschaltung 7 in dem dezentralen Steuerungsteil 2 auf einen Prozessor 8. Der Prozessor 8 ist mit einer außerhalb des dezentralen Steuerungsteiles 2 verlaufenden Datenbusleitung 9 verbunden und erhält seine Versorgungsspannung über Leitungen 10, die aus dem dezentralen Steuerungsteil 2 herausführen. Der Prozessor 8 ist in der Lage, aus den von den Positionsgebern 6 festgestellten Drehungen des Rotors 5 - nach einer Nullpunkt-Einstellung - die absolute Position des mit dem Motor 1 praktisch schlupffrei verbundenen Maschinenelements zu bestimmen. Die bestimmte Position wird in einem Speicher 11 des dezentralen Funktionsteiles 2 abgespeichert, wobei der abge-speicherte Wert 11 durch eine Pufferbatterie 12, falls erforderlich, gegen Flüchtigkeit gesichert ist, Über die Datenbusleitung 9 erhält der Prozessor 8 den Fahrauftrag für den Motor 1, um das vom Motor 1 bewegte Maschinenelement in eine Sollposition zu bringen. Durch die über den Positionsgeber 6 festgestellte momentane Position kann der Prozessor 8 einen Vergleich zwischen Soll- und Ist-Positionen vornehmen und daraus ein Steuersignal für einen Leistungsteil 13 generieren. Der Leistungsteil 13 ist über kurze Leitungen mit den Erregerwicklungen 4 des Motores 1 verbunden und sorgt für eine weitere Drehung des Rotors 5, um das von dem Motor 1 bewegte Maschinenelement der Soll-Position näher zu bringen.

Das Sensorteil 3 enthält drei Sensoren 14, 15, 16, die entlang der durch den Motor 1 bedienten Bewegungsachse des Maschinenelementes angeordnet sind und als Endstellungssensoren 14, 16 und Nullpunkt-Sensor 15 fungieren. Ein weiterer Sensor 17 kann in Ergänzung des Positionsgebers 6 die Drehbewegungen des Motors 1, beispielsweise an einem Getriebe oder an der Motorspindel, delektieren und über die Anpassungsschaltung 7 dem Prozessor 8 mitteilen.

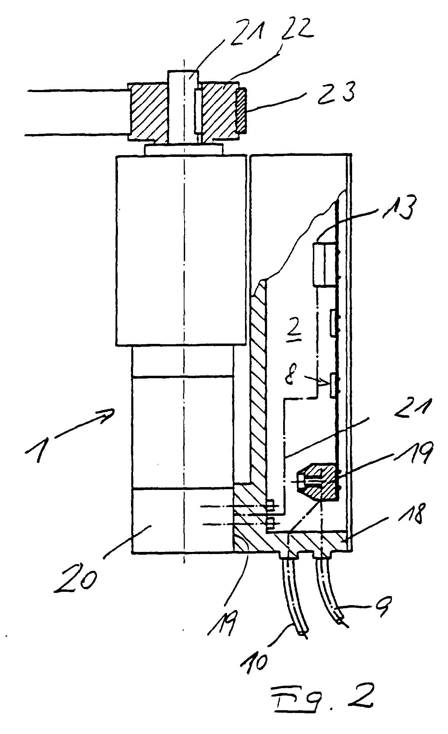

**Figur 2** zeigt eine vorteilhafte Anordnung des dezentralen Steuerungsteils 2 in einem metallischen Gehäuse 18, das mit kleinen Kontaktflächen 19 an ein Motorengehäuse 20 angeschraubt ist. Das teilweise geschnitten dargestellte Gehäuse 18 beherbergt gemeinsam den Prozessor 8 mit seiner Peripherieschaltung und einen Leistungstransistor, der den Leistungsteil 13 repräsentiert. Ein Anschlußbauteil 19 stellt den Anschluß zur Datenbusleitung 9 und Speisespannungsleitung 10 her.

Schematisch sind die durch eine Bohrung der an den Kontaktflächen 19 aneinanderliegenden Gehäuse 18, 20 durchgeführten elektrischen Leitungen 21 angedeutet.

Die Leitungen von den Positionsgebern 6 und von dem Leistungsteil 13 zu den Erregerwicklungen des Motors 1 können mit einer minimalen Länge ausgeführt sein und unterliegen daher praktisch keinen Störeinflüssen.

**Figur 2** läßt eine Abtriebsspindel 21 des Motors 1 erkennen auf der ein Zahnrad 22 drehfest befestigt ist, das seinerseits einen Zahnriemen 23 treibt, der zur möglichst schlupffreien Transmission der Drehbewegung der Spindel 21 auf ein Stellgetriebe dient.

Die Funktion des Prozessors 8 besteht im wesentlichen in der Bearbeitung der Schnittstellen zu den Sensoren und der Datenbusleitung, einem Zählvorgang für die Drehinkremente, die beispielsweise von den Positionsgebern 6 oder von dem Inkrementalgeber 17 erzeugt werden, in einer Pulsbreitenmodulation für die Steuerung des Leistungsteiles 13 und einer Geschwindigkeitssteuerung für den Rotor 5 des Motors 1. Die übrigen Steuerungsaufgaben werden in der (nicht dargestellten) zentralen Steuerung der Maschinen vorgenommen.

Das dezentrale Steuerungsteil 2 kann über zusätzliche Ein- und Ausgänge verfügen, über die eine manuelle Eingabe von Befehlen möglich ist. Dabei kann der Prozessor 8 ggf. so ausgebildet sein, daß er auf die Eingangssignale selbst reagieren kann oder die zentrale Steuerung kann vorgeben, wie der Prozessor 8 arbeiten muß, wenn der zusätzliche Eingang oder Ausgang betätigt wird. Auf diese Weise läßt sich die Handhabung der Steuerung flexibel erweitern.

Es ist zweckmäßig, den Leistungsteil 13 mit einer eigenen Stromversorgung zu versehen, die unabhänigig von der Stromversorgung für den Prozessor 8 und die Sensoren 6, 14, 15, 16, 17 ist. Dadurch ist es möglich, in einem Notfall die Leistungsstufe 13 als Treiber des Motors 1 stillzusetzen und dem Prozessor 8 weiterhin eine Positionsbestimmung des (auslaufenden) Motors 1 zu erlauben.

## Patentansprüche

1. Maschinensteuerung für durch mehrere bürstenlose Gleichstrommotore (1) genau zu positionierende Maschinenelemente mit einer zentralen Steuerung und mit Positionssensoren (6), deren Ausgangssignale mit Sollwerten verglichen werden und zur Erzeugung von Steuersignalen für ein dem jeweiligen Motor (1) zugeordnetes Leistungsteil (13) dienen, wobei dem jeweiligen Motor (1) ein mit der zentralen Steuerung verbundener Prozessor (8) zugeordnet ist, der selbsttätig die Ausgangssignale der Positionssensoren (6) für den zugehörigen Motor (1) auswertet und die Steuersignale für den Leistungsteil (13) des Motors (1) generiert, **dadurch gekennzeichnet, daß** der im bürstenlosen Gleichstrommotor (1) enthaltene Sensor für die Drehbewegung des Motors (1) auch als Positionssensor (6) für den Prozessor (8) verwendet wird, daß der Positionssensor (6) Inkremente der Drehbewegung des Motors (1) detektiert und dem Prozessor (8) übermittelt, daß der Prozessor (8) aus den detektierten Drehbewegungen die absolute Position des jeweiligen Maschinenelements durch Summenbildung ermittelt und den ermittelten Wert in einem Speicher (11) ablegt und daß der Prozessor (8) und das Leistungsteil (13) in einem gemeinsamen Gehäuse (18) an das Motorengehäuse (20) angesetzt ist.

2. Maschinensteuerung nach Anspruch 1, dadurch gekennzeichnet, daß das gemeinsame Gehäuse (18) aus gut wärmeleitendem Material besteht und über kleinflächige Kontaktflächen (19) an dem Motorengehäuse (20) anliegt.

3. Maschinensteuerung nach Anspruch 2, dadurch gekennzeichnet, daß das Leistungsteil (13) an einer nicht dem Motorengehäuse (20) zugewandten Wand des gemeinsamen Gehäuses (18) flach anliegend befestigt ist.

4. Maschinensteuerung nach einem der Ansprüche 1 bis 3, dadurch gekennzeichnet, daß das Leistungsteil (13) mit einer gesonderten Stromversorgung verbunden ist, die im Notfall separat abschaltbar ist.

## Claims

1. Machine control for machine elements to be positioned accurately by means of several brushless d.c. motors (1) with a central control and with position sensors (6), the output signals of which are compared with desired values and are used to generate control signals for a power section (13) assigned to the particular motor (1) in question, a processor (8) connected to the central control being assigned to the particular motor (1) in question, which processor automatically evaluates the output signals of the position sensors (6) for the associated motor (1) and generates the control signals for the power section (13) of the motor (1), characterized in that the sensor for the rotary movement of the motor (1) contained in the brushless d.c. motor (1) is also used as position sensor (6) for the processor (8), in that the position sensor (6) detects increments of the rotary movement of the motor (1) and transmits them to the processor (8), in that the processor (8) determines the absolute position of the particular machine element in question from the detected rotary movements by summation and stores the value determined in a memory (11) and in that the processor (8) and the power section (13) are fixed to the motor housing (20) in a common housing (18).

2. Machine control according to Claim 1, characterized in that the common housing (18) comprises material that is a good conductor of heat and rests against the motor housing (20) by means of small-area contact surfaces (19).

3. Machine control according to Claim 2, characterized in that the power section (13) is fixed to a wall of the common housing (18) that does not face the motor housing (20) so that it rests flat against it.

4. Machine control according to one of Claims 1 to 3, characterized in that the power section (13) is connected to a separate power supply which can be switched off separately in an emergency.

## Revendications

1. Commande de machine pour des éléments de machine qui doivent être positionnés avec précision par plusieurs moteurs (1) à courant continu sans balais, comprenant une commande centrale et des sondes de position (6) dont les signaux de sortie sont comparés à des valeurs de consigne et servent à la création de signaux de commande pour une partie d'alimentation en puissance (13) associée à chaque moteur (1), tandis qu'à chaque moteur (1) est associé un processeur (8) relié à la commande centrale, ce processeur traitant de manière autonome les signaux de sortie des sondes de position (6) du moteur associé (1) et générant les signaux de commande pour la partie d'alimentation en puissance (13) du moteur (1), caractérisée en ce que la sonde de position (6) que comporte le moteur à courant continu sans balais (1) pour le mouvement rotatif du moteur (1) sert également de sonde de position (6) pour le processeur, en ce que la sonde de position (6) détecte et fournit au processeur (8) des incréments du mouvement rotatif du moteur (1), en ce que le processeur (8) calcule à partir des mouvements rotatifs détectés la position absolue de l'élément de machine correspondant et transfère la valeur calculée dans une mémoire 11, et en ce que le processeur (8) et la partie d'alimentation en puissance (13) sont dans un boîtier commun (18) placé sur le boîtier de moteur (20).

2. Commande de machine selon la revendication 1, caractérisée en ce que le boîtier commun (18) est réalisé en matériau bon conducteur de la chaleur et porte sur le boîtier de moteur (20) par de petites surfaces de contact (19).

3. Commande de machine selon la revendication 2, caractérisée en ce que la partie d'alimentation en puissance (13) est fixée reposant à plat sur une paroi du boîtier commun (18) qui n'est pas tournée vers le boîtier de moteur (20).

4. Commande de machine selon l'une quelconque des revendications 1 à 3, caractérisée en ce que la partie d'alimentation en puissance (13) est reliée à une alimentation en courant spéciale, qui peut être débranchée séparément en cas d'urgence.
